# EUROPEAN PATENT APPLICATION

(11) **EP 1 071 004 A1**
(43) Date of publication of application: **24.01.2001**
(21) Application number: 00115413.7
(22) Date of filing: 17.07.2000
(51) Int. Cl.: G06F 1/00

(54) **Communication control method and communication terminal unit capable of limiting connection destination of dial up-connection**

(30) Priority: 19.07.1999 JP 20534999
(71) Applicant: AIWA CO., LTD., Taito-ku, Tokyo (JP)
(72) Inventor: Tanaka, Taichi, Urawa-shi (JP)
(74) Representative: Patentanwälte Leinweber & Zimmermann

(57) **Abstract**

In communication control method and communication terminal unit capable of limiting connection destinations of dial up-connection, limiting information for limiting connection destinations of dial up-connection is set in the communication terminal unit (12). When a request for dial up- connection is made by a computer unit (10), the communication terminal unit (12) determines, on the basis of a telephone number of a connection destination requested to be connected and the set limiting information, whether connection to the connection destination is permitted. Only when permission to connect is settled, the telephone number of the connection destination is transmitted to the public communication line side to permit communication. Through this, automatic dial up-connection to an unintended connection destination can be prevented.

## Description

### BACKGROUND OF THE INVENTION

The present invention relates to communication control method and communication terminal unit and more particularly, to communication control method and communication terminal unit which can limit connection destinations of dial up-connection.

Conventionally, it has been practiced to interconnect a plurality of servers through a communication network and transmit various kinds of information stored in individual servers between the servers. When taking an internet, for instance, a plurality of WWW (World Wide Web) servers and mail servers are connected to a communication network to enable not only text data but also data of image and voice as well as animations to be transmitted. Besides, electronic mails are also exchanged.

As a method for connection to the internet, there is available a method for making constant connection by using a personal communication line or a method for making a dial up-connection to a service presenter that offers internet connection services, that is, a so-called provider through a general public communication line only when needed.

### SUMMARY OF THE INVENTION

Incidentally, when connecting to an internet to access information of a desired server, the accessed information of the server is sometimes linked to information of a different server, with the result that a user is unconscious that the information of the different server is sometimes accessed automatically. In addition, when information is accessed, a program is sometimes down-loaded.

The down-loaded program sometimes includes an automatic line switching program for disconnecting a line being in connection and dial-connecting automatically to an information presenter that offers charged information and an automatic line switching program for disconnecting a line being in connection and dial-connecting automatically to, for example, an overseas provider. Accordingly, when the automatic line switching program is executed at the time that a connection is made to the internet by dial up-connection, even when the line is switched, the user mistakes information reading from the switched destination for the information reading from the different server at the same link destination. Thus, the user is unconscious that the charged information is accessed or talking is on international telephone, so that the user is thereafter conditioned to receive an unconcerned bill.

Accordingly, an object of the present invention is to provide communication control method and communication terminal unit which can solve the conventional problems and which can limit connection to a charged information presenter by limiting connectable lines.

In a communication control method according to one aspect of the invention, limiting information for limiting connection destinations to which dial up-connection is requested by a computer unit can be set changeably and when a request for dial up-connection is made and communication is conducted through a public communication line, it is determined on the basis of a telephone number of a requested connection destination and the set limiting information whether connection to the requested connection destination is permitted, whereby only when permission to connect is settled, communication can be permitted by transmitting the telephone number of the connection destination to the public communication line. This can prevent automatic dial up-connection to an unintended connection destination.

A communication terminal unit according to another aspect of the invention is interposed between a computer unit and a public communication line to communicate with a connection destination to which dial up-connection is requested by the computer unit and comprises limiting information hold means for changeably holding limiting information for limiting connection destinations to which dial up-connection is made, connection determining means which, when a request for dial up-connection is made from the computer unit, determines on the basis of a telephone number of a requested connection destination and the limiting information of the limiting information hold means whether connection to the requested connection destination is permitted, and communication means for performing communication by transmitting the telephone number of the connection destination to the public communication line when permission to connection is settled by the connection determining means. If permission to connect is not settled by the connection determining means, communicator means informs that connection to the requested connection destination is limited or connection limiting signal output means delivers to the computer unit a signal purporting that connection to the requested connection destination is limited.

In an example of the invention, in a communication terminal unit for communicating with a connection destination to which a dial up-connection is requested by a computer unit through a public communication line, for example, either telephone numbers of connection destinations for which dial up-connection is permitted or telephone numbers of connection destinations for which dial up-connection is not permitted are set as limiting information. When a request for dial up-connection is made, a telephone number of the requested connection destination is compared with a set telephone number and only when permission to connect is settled, the telephone number of the connection destination is transmitted to the public communication line to permit communication. When permission to connect is not settled, the fact that connection to the requested connection destination is limited is informed to the communication terminal unit or the computer unit.

Further, in another example of the invention, a program for setting/changing the limiting information is recorded on a recording medium such as floppy disk or optical disk. The limiting information is set, together with passwords, in the communication terminal unit and the recording medium is recorded with passwords. When the program recorded on the recording medium is executed and a password recorded on the recording medium coincides with a password set together with the limiting information, the limiting information is allowed to be set/changed.

### BRIEF DESCRIPTION OF THE DRAWINGS

Fig. 1 is a diagram showing an example of construction of a communication system to which the present invention is applied.
Fig. 2 is a block diagram showing an example of construction of a communication terminal unit represented by a modem according to an embodiment of the invention.
Fig. 3 is a flow chart showing an example of a password setting process in a computer unit in the embodiment of the invention.
Fig. 4 is a flow chart showing an example of a password setting process in the modem in the embodiment of the invention.
Fig. 5 is a flow chart showing an example of a telephone number setting process in the computer unit in the embodiment of the invention.
Fig. 6 is a flow chart showing an example of a telephone number setting process in the modem in the embodiment of the invention.
Fig. 7 is a flow chart showing an example of operation of the modem in the embodiment of the invention.

### DETAILED DESCRIPTION OF THE EMBODIMENTS

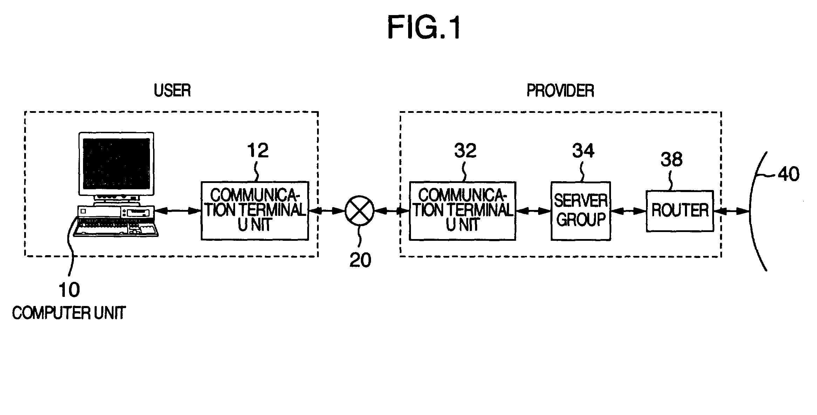

A communication terminal unit according to the present invention will be described hereunder with reference to the accompanying drawings. Fig. 1 shows an example of construction of a communication system to which the present invention is applied. A computer unit 10 on the user side is connected to a public communication line 20 through a communication terminal unit 12 such as modem or terminal adapter. On the other hand, a provider for offering internet connection service is connected to the public communication line 20 through a communication terminal unit 32 which in turn is connected to a server group 34 comprised of, for example, a WWW server and a mail server. The server group 34 is connected to an internet 40 through a router 38.

Now, for connection of the computer unit 10 on the user side to the internet 40 by dial up-connection, the computer unit 10 controls the communication terminal unit 12 such that the computer unit 10 can be connected to the communication terminal unit 32 on the provider side by way of the public communication line 20 in accordance with predetermined protocol. When the computer unit 10 is connected to the communication terminal unit 32 in this manner, authentication of a user is carried out and thereafter, a process for connecting the computer unit 10 to the internet 40 is executed by means of the server group 34. It is to be noted that there are provided a plurality of access points for internet connection on the provider side and the server group 34 is connected to the access points through a frame relay scheme using the public communication line 20 or a personal line, thereby ensuring that the user can make a dial up-connection by using a neighboring access point to complete the Internet connection cheaply and easily.

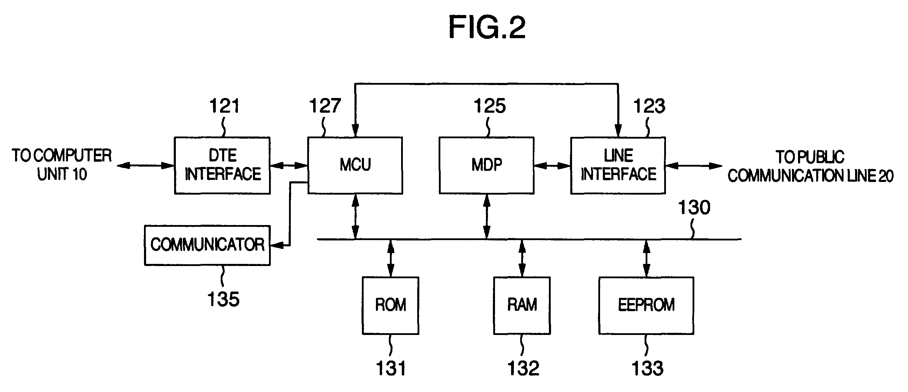

Referring now to Fig. 2, the construction of the communication terminal unit 12, for example, a modem according to an embodiment of the invention utilized by the user for the purpose of making dial up-connection will be described. The communication terminal unit represented by the modem 12 is connected to the computer unit 10 through a DTE interface 121. The DTE interface 121, adapted to interconnect the computer unit 10 and the modem 12, adjusts the signal level to convert it to a level that can permit correct data communication. The DTE interface is connected to a micro-control unit (MCU) 127 to be described later.

The modem 12 is connected to the public communication line 20 through a line interface 123 serving as a communication means. The line interface 123 carries out various kinds of processes, including a circuit capture process for short-circuiting a line to inform the exchange of the public communication line that the line is to be used, a 2-wire/4-wire conversion process for connecting the interior of the modem 12 of 4-wire system to the public communication line 20 of 2-wire system, a pulse dial signal generating process for making a request to a desired access point for connection thereto by generating and transmitting a pulse dial signal, and a process for detecting a terminating signal supplied from the exchange of the public communication line 20 and generating a call detection signal indicating that calling proceeds. The circuit interface 123 is connected with a modem data pump (MDP) 125 and the micro-control unit 127.

The MDP 125 carries out a demodulating process for converting an analog receiving signal supplied from the public communication line 20 to a digital receiving signal and then demodulating the digital receiving signal and a modulating process for modulating a digital signal to be transmitted and then converting the modulated digital signal into an analog transmitting signal. Also carried out in the MDP 125 are a signal process for monitoring various signals from the exchange such as busy tone and ring-back tone and informing the MCU 127 of these signals and a process for generating a tone dial signal that makes the request to the desired access point for connection thereto.

The MCU 127 supplies a control signal CTA to the line interface 123 to control the operation of the line interface, for example, the circuit capture and the generation of a pulse dial signal. The MCU 127 also supplies a control signal CTB to the MDP 125 through an internal bus 130 to be described later so as to control the operation of the modulating and demodulating processes as well as the generation of a tone signal in the MDP 125. Further, the MCU 127 carries out a process for performing various kinds of setting and operation control in the modem 12 by interpreting commands supplied from the computer unit 10, an error detection/correction process and a process for data compression and data packeting. The MCU 127 is connected with a communicator or notification unit 135, which announces in terms of, for example, display or sound that, for example, art unauthorized dial up-connection request is made.

The MDP 125 and the MCU 127 are coupled to each other through the medium of the internal bus 130. The internal bus 130 is coupled with memories, for example, ROM 131 and RAM 132 and a data rewritable memory, for example, EEPROM 133. Control signals and various data signals are transmitted between the individual components through the internal bus 130. The ROM 131 is stored with a program for operating the modem 12 and the RAM 132 is used as a working area. The EEPROM 133 is stored with setting conditions for the modem 12, for example, communication standards and compression formats. Also stored in the EEPROM is, for example, abridged number information. Further, information for limiting connectable lines and a password for permitting change of the information for limiting connectable lines are supplied from the computer unit 10 to the EEPROM 133 and stored therein. Accordingly, the EEPROM 133 functions as a limiting information holder. Therefore, only when a correct password is supplied from the computer unit 10, the information for limiting connectable lines in the EEPROM 133 can be changed. Besides, software for changing the correct password and the information for limiting connectable lines is recorded on a rewritable recording medium that can used by being detachably mounted to the computer unit 10 or a peripheral unit (not shown) of the computer unit 10, for example, a floppy disk or an optical disk and is read out of the recording medium as necessary. Therefore, the information for limiting connectable lines can be prevented from being rewritten externally through the medium of the public communication line 20.

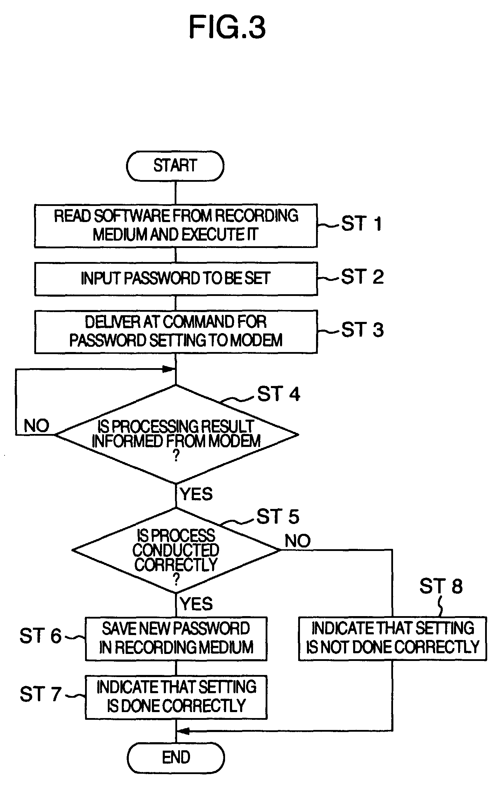

An example of operation of the communication terminal unit according to the present embodiment constructed as above will be described by making reference to flow charts of Figs. 3 to 7. In case the modem 20 is used initially, the password setting is effected. Since, as described above, the application software for setting/changing the password and setting/changing the information for limiting connectable lines is recorded on the rewritable recording medium such as a floppy disk or an optical disk. The password and the information for limiting connectable lines can be set/changed by mounting the recording medium to the computer unit 10 or the not-shown peripheral unit connected thereto and executing the mounted recording medium. With the application software for setting/changing the limiting information recorded on the recording medium, the limiting information cannot be set/changed without using the recording medium recorded with the application software and hence the limiting information can be prevented from being rewritten easily. In the following description, connectable telephone numbers will be set as the limiting information for limiting connectable lines.

The flow chart of Fig. 3 shows a process operation in the computer unit 10 when a password is set. A program in the computer unit 10 executes this process. In the computer unit 10, the application software is read out of the recording medium and executed in step ST1 and the program proceeds to step ST2. In the step ST2, the password to be set is inputted by using an input means such as keyboard and the program proceeds to step ST3.

In the step ST3, an AT command for password setting is delivered to the modem 12. Predetermined passwords are precedently recorded on each of the EEPROM 133 of the modem 12 and the recording medium recorded with the application software and a password recorded in the modem 12 is collated with a password recorded on the recording medium. When coincidence occurs therebetween, the inputted new password is set. Therefore, the AT command for password setting is added, as parameters, with the inputted password and the password recorded on the recording medium. For example, the AT command for password setting has a format of AT letter (character) code 1 = "inputted password", "password recorded on recording medium". It will be appreciated that the letter code 1 is an arbitrary letter code which is so set as to indicate the AT command for password setting.

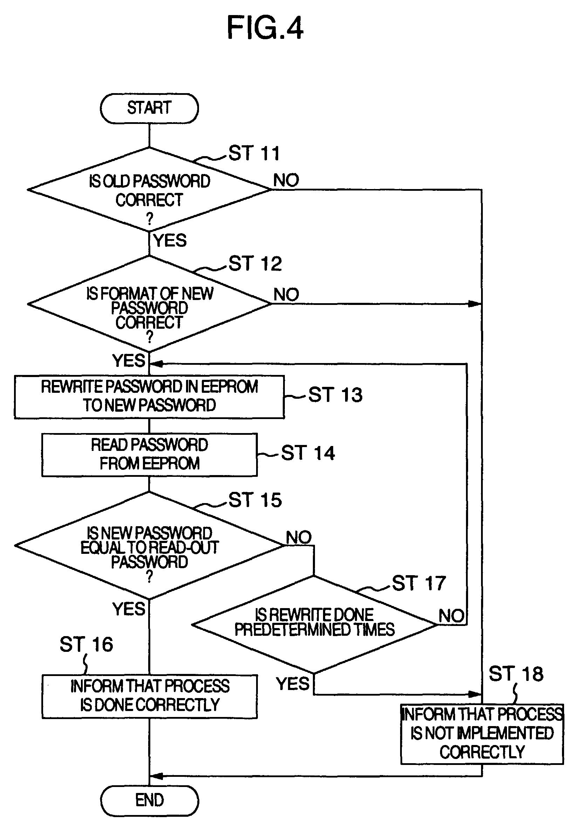

When the AT command for password setting is supplied to the modem 12, a password setting process as shown in Fig. 4 is conducted in the modem 12. This process is implemented in accordance with a program in the MPU 127. Firstly, it is determined in step ST11 whether an old password added to the AT command for password setting, that is, a password recorded on the recording medium is correct. If the password recorded on the recording medium equals the password stored in the EEPROM 133, the old password is settled to be correct and the program proceeds to step ST12. If the old password is not settled to be correct, the program proceeds to step 18.

It is determined in the step ST12 whether the format of the new password is correct and if the new password format is settled to be correct, the program proceeds to step ST13 but if not settled to be correct, the program proceeds to the step ST18.

In the step ST13, the password which has been written in the EEPROM 133 is rewritten to the new password and the program proceeds to step ST14. In the step ST14, the password is read out of the EEPROM 133 and the program proceeds to step ST15. In the step ST15, the new password is determined as to whether to be equal to the password read out of the EEPROM 133. By the procedure in step ST13 through step ST15, it can be confirmed whether the password is rewritten correctly. If equality of password is settled in the step ST15, that is, rewrite is implemented correctly, the program proceeds to step ST16 in which a processing result indicating that the password setting process is done correctly is informed to the computer unit 10 and then the password setting process ends. If equality of password is not settled in the step ST15, that is, rewrite is not implemented correctly, the program proceeds to step ST17.

It is determined in the step ST17 whether the process for rewriting the password in the EEPROM 133 to the new password is carried out predetermined times. If the rewrite process is not carried out predetermined times, the program returns to the step ST13 but if the rewrite process is settled to be carried out predetermined times, the program proceeds to the step ST18.

When the program proceeds to the step ST18 by way of the step ST11, ST12 or ST17, a processing result indicating that the process is not implemented correctly is informed to the computer unit 10 and the password setting process ends.

Reverting to Fig. 3, when the AT command for password setting is issued in the step ST3 and the program proceeds to step ST4, it is determined in the step ST4 whether the processing result is informed from the modem 12. If the processing result is not informed, the program returns to the step ST4 but if the processing result is informed, the program proceeds to step ST5.

In the step ST5, it is determined, on the basis of the processing result informed from the modem 12, whether the process is conducted correctly. If a processing result indicating that the process is conducted correctly is informed, the program proceeds to step ST6 but a processing result indicating that the process is not conducted correctly is informed, the program proceeds to step ST8.

In the step ST6, the new password written to the EEPROM 133 is recorded on the recording medium and then the program proceeds to step ST7. In the step ST7, an indication purporting that setting is completed correctly is displayed on the screen of the computer unit 10 and the password setting operation ends.

In case the program proceeds to the step ST8 from the step ST5, an indication purporting that setting is not completed correctly is displayed on the screen of the computer unit 10 and the password setting operation ends.

For changing the password stored in the EEPROM 133, too, the application software recorded on the recording medium is executed and a new password is inputted, so that the password can be changed through a process similar to the aforementioned password setting operation shown in Figs. 3 and 4.

Alternatively, a password inputted at the time the use of the modem is started for a first time may be set as it is without performing recording of passwords on each of the EEPROM 133 and the recording medium in advance and thereafter the thus set password may be changed through the above-described method as necessary.

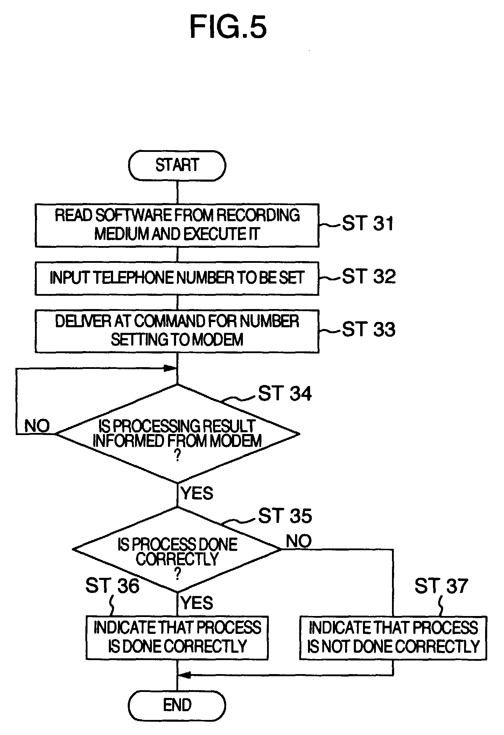

Next, an operation of setting the information for limiting connectable lines will be described. The flow chart of Fig. 5 shows a telephone number setting process in the computer unit 10 when a connectable telephone number is set. A program in the computer unit 10 executes this process. In the computer unit 10, the application software is read out of the recording medium and executed in step ST31 and the program proceeds to step ST32. In the step ST32, a telephone number to be set is inputted by using the input means such as keyboard and the program proceeds to step ST33.

In the step ST33, an AT command for number setting is delivered to the modem 12. To prevent a telephone number in the EEPROM 133 from being set/changed freely, password collation is carried out when setting/changing the telephone number so that the process for setting/changing the telephone number may be permitted only when coincidence of password occurs. Therefore, when the AT command for number setting is delivered to the modem 12, the inputted telephone number and the password recorded on the recording medium are added to the AT command for number setting. For example, the AT command for number setting has a format of AT letter (character) code 2 = "password on recording medium", "inputted telephone number". It is to be noted that the "letter code 2" is an arbitrary letter code which is so set as to indicate the AT command for number setting.

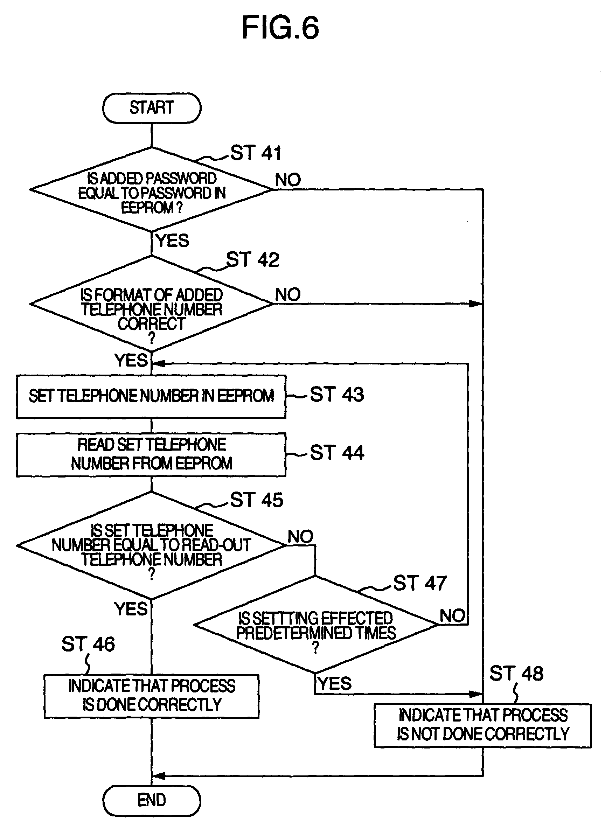

With the AT command for number setting supplied to the modem 12, a telephone number setting process shown in Fig. 6 is carried out in the modem 12. This process is conducted in accordance with a program in the MPU 127. It is determined in step ST41 whether the password added to the AT command for number setting coincides with the password recorded on the EEPROM 133. If coincident, the program proceeds to step ST42 but if non-coincident, the program proceeds to step ST48.

In the step ST42, it is determined whether the format of the added telephone number is correct. If the format is correct, the program proceeds to step ST43 but if the format is not settled to be correct, the program proceeds to the step ST48.

In the step ST43, the telephone number is set in the EEPROM 133 and then the program proceeds to step ST44. In the step ST44, the thus set telephone number is read out of the EEPROM 133 and the program proceeds to step ST45. It is determined in the step ST45 whether the telephone number set in the EEPROM 133 equals the telephone number read out of the EEPROM 133. Through the procedure from the step ST43 to the step ST45, it can be confirmed whether the telephone number is set correctly. If equality of telephone number is settled in the step ST45, the program proceeds to step ST46 in which a processing result indicating that the setting process of the telephone number is implemented correctly is informed to the computer unit 10 and the telephone number setting process ends. If equality of telephone number is not settled in the step ST45, the program proceeds to step ST47.

In the step ST47, it is determined whether setting of the telephone number in the EEPROM 133 is effected predetermined times. If the setting is not effected predetermined times, the program returns to the step ST43 but if the setting is settled to be effected predetermined times, the program proceeds to the step ST48.

When the program proceeds to the step ST48 through the step ST41, ST42 or ST47, a processing result indicating that the setting process of the telephone number is not implemented correctly is informed to the computer unit 10 in the step ST48 and the telephone number setting process ends.

Reverting to Fig. 5, when the AT command for number setting is delivered in the step ST33, the program proceeds to step ST34 in which it is determined whether a processing result is informed from the modem 12. If the processing result is not informed, the program returns to the step ST34 but if the processing result is informed, the program proceeds to step ST35.

In the step ST35, it is determined, on the basis of the processing result informed from the modem 12, whether the process is implemented correctly. If a processing result indicating that the process is implemented correctly is informed, the program proceeds to step ST36 but a processing result purporting that the process is not implemented correctly is informed, the program proceeds to step ST37.

In the step ST36, an indication purporting that the telephone number is set correctly is displayed on the screen of the computer unit 10 and the setting operation ends.

When the program proceeds to the step ST35 from the step ST37, an indication purporting that setting is not carried out correctly is displayed on the screen of the computer unit 10 in the step ST37 and the telephone number setting operation ends.

As described above, the recording medium recorded with the password equal to that recorded on the EEPROM 133 is used to permit the telephone number representing the limiting information to be set/changed only when coincidence of password occurs and consequently, the limiting information can be prevented steadily from being rewritten.

In the foregoing, the setting process of telephone number has been described. On the other hand, when a telephone number stored in the EEPROM 133 is desired to be changed, a write address for the telephone number may be controlled to enable a new telephone number to be overwritten at a recording position of the telephone number to be changed, thereby ensuring that the registered telephone number can be changed. Besides, when a registered number is desired to be confirmed, a password may be added to a command for reading the telephone number recorded on the EEPROM 133 and supplied to the modem 12, so that password collation can be made to confirm the telephone number through which only the user who uses the recording medium recorded with the correct password is set.

In the foregoing, the telephone number can be set/changed by using the recording medium recorded with the password equal to that recorded on the EEPROM 133. But input operation of a password may be done at the time that the application software is read out of the recording medium and executed in order that only when the inputted password coincides with the password on the recording medium, the application software is allowed to be executed to thereby prevent another user, who personates to use the recording medium recorded with the correct password, from setting/changing the telephone number easily.

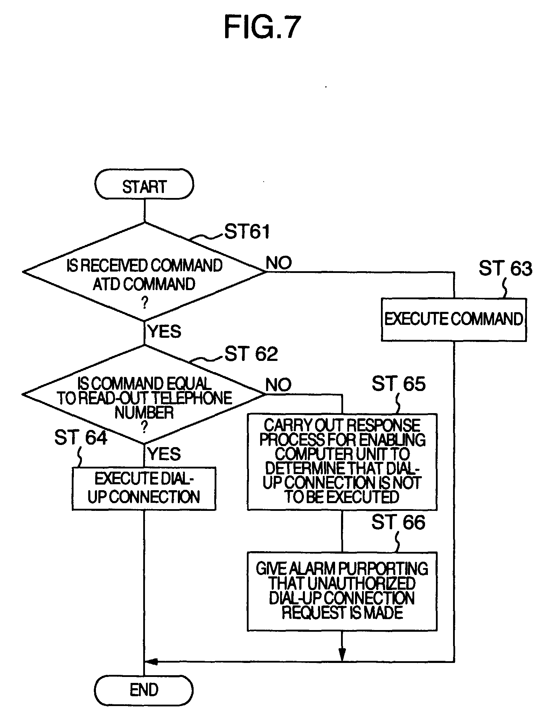

With the telephone number set in the EEPROM 133 of the modem 12 in this manner, dial up-connection operation can be limited by using the set telephone number. Fig. 7 shows an operation in the modem 12 when a dial up-connection request is made. This process is carried out in accordance with a program in the MPU 127. It is determined in step ST61 whether an AT (attention) command supplied from the computer unit 10 is an AT command for dial origination (for example, "ATD"). If the AT command for dial origination is settled, the program proceeds to step ST62. If the AT command for dial origination is not settled, the program proceeds to step ST63 in which a process conforming to the supplied command is executed.

It is determined in the step ST62 whether the telephone number added to the AT command for dial origination equals the telephone number read out of the EEPROM 133. If equality of telephone number is settled, the program proceeds to step ST64 and a dial up-connection is executed for the telephone number to which a request for connection is made. If equality of telephone number is not settled, the program proceeds to step ST65 in which a response process is carried out which enables the computer unit 10 to determine that dial up-connection is not to be executed. In other words, a signal indicating that the connection is limited, that is, a connection limiting signal is supplied to the computer unit 10. For example, a result code, such as "NO CARRIER" indicating that a carrier cannot be detected or is extinguished, "NO DIALTONE" indicating that a dial tone is not detected within a predetermined time following off-hook, "NO ANSWER" indicating that voicelessness for about 4 seconds following input of the at mark command is not detected, "ERROR" indicating that the command is mistaken or "BUSY" indicating that a busy signal is detected, is informed from the modem 12 to the computer unit 10.

After the response process as above has been finished in the step ST65, the program proceeds to step ST66 in which an alarm purporting that the dial up-connection request is made to the telephone number which is not allowed to be connected is given, in terms of display or voice, to the communicator 135 of the modem 12 and the process ends.

In this manner, the connection determining function is executed in the steps ST62 and ST65.

In the foregoing embodiment, the result code is informed from the modem 12 to the computer unit 10 in the event that a dial up-connection is not executed but alternatively, a program for controlling display in the computer unit 10 may be stored in the ROM 131 or EEPROM 133 of the modem 12 and the program may be executed when the dial up-connection is not to be executed, thereby ensuring that an alarm indication purporting that a dial up-connection request is made to a telephone number which is not allowed to be connected can be displayed on the screen of the computer unit 10.

Further, in the event that a dial up-connection is not to be executed, a predetermined result code purporting that a dial up-connection request is made to a telephone number which is not allowed to be connected may be informed from the modem 12 to the computer unit 10 and responsive to the code, the computer unit 10 may automatically execute a program for displaying that the dial up-connection request is made to the telephone number which is not allowed to be connected.

In this manner, the indication to the effect that the dial up-connection request is made to the telephone number which is not allowed to be connected is informed in terms of voice or display and therefore, when, for example, communication with the provider is automatically disconnected and a dial up-connection is made to another connection destination, the reason for disconnection of communication with the provider can be determined easily.

Further, according to the foregoing embodiment, a dial up-connection is permitted for only a set telephone number and therefore, by setting telephone numbers of, for example, access points of the provider, a dial up-connection to an unintended connection destination can be prevented easily and efficiently with less memory capacity.

To add, the telephone numbers to be set are not limited to telephone numbers for which dial up-connection is permitted but telephone numbers having a prohibition against dial up-connection may be set. More particularly, in case inequality of telephone number is settled at the time that a dial up-connection request is made, the program proceeds to the aforementioned step ST64 in which the dial up-connection is executed. If equality of telephone number is settled, the processing in the step ST65 is implemented and the ensuing processes are carried out similarly to the above. In that case, for example, a number indicative of international telephone or a number indicative of an information presenter which offers charged information may be so set as to be detected in order that a dial up-connection request made to that telephone number cannot be acknowledged. By setting the telephone number prohibited from dial up-connection, the dial up-connection can be limited without changing the setting even when the number of telephone numbers permitted for connection increases.

Besides, in the foregoing embodiment, the computer unit 10 is described as being separated from the communication terminal unit 12 but obviously, the communication terminal unit may be incorporated in the computer unit or in the case of a television unit having the function of connecting to the internet, the computer unit and the communication terminal unit (the function of the computer unit and communication terminal unit) may be incorporated in the television unit.

According to the present invention, when a request for dial up-connection is made, it is determined, on the basis of a telephone number of a requested connection destination and set limiting information, whether connection to the requested connection destination is permissible and only when permission to connect is settled, communication is allowed. Therefore, an automatic dial up-connection to an unintended connection destination can be prevented.

Also, when telephone number information of a connection destination for which connection is permitted is used as the limiting information, dial up-connection can be limited easily and efficiently with less memory capacity and when telephone number information of a connection destination for which connection is not permitted is used as the limiting information, setting need not be changed even if the number of connectable telephone numbers increases.

Besides, if permission to connect is not settled, the communication terminal unit or the computer unit informs that connection to the requested connection destination is limited and hence, the fact that limitation on the dial up-connection proceeds can be recognized easily.

In addition, the program for performing the setting/change of the limiting information is recorded on the recording medium, the limiting information is set together with passwords and passwords are also recorded on the recording medium. Then, when a password recorded on the recording medium coincides with a password set together with the limiting information, the limiting information is allowed to be set/changed and consequently, the limiting information can be prevented from being rewritten.

## Claims

1. A communication control method comprising the steps of:
changeably setting limiting information for limiting a connection destination to which dial up-connection is requested by a computer unit (10) (Fig. 6);
when a request for dial up-connection is made and communication is conducted through a public communication line (20), determining on a basis of a telephone number of a requested connection destination and said set limiting information whether connection to said requested connection destination is permitted (ST62, ST64); and
only when permission to connect is settled, transmitting the telephone number of said connection destination to said public communication line side to permit communication (ST64).

2. A communication control method according to claim 1, wherein said limiting information is telephone number information of connection destinations for which connection is permitted.

3. A communication control method according to claim 1, wherein said limiting information is telephone number information of connection destinations for which connection is not permitted.

4. A communication control method according to claim 1, wherein when permission to connect is not settled in said determining step, an indication purporting that connection to said requested connection destination is limited is informed (ST66).

5. A communication control method according to claim 1, wherein when permission to connect is not settled in said determining step, a signal indicating that connection to said requested connection destination is limited is supplied to said computer unit (ST65).

6. A communication control method according to claim 1 further comprising the step of setting/changing said limiting information by causing said computer unit to read a program for setting/changing said limiting information recorded on a recording medium from said recording medium and execute said program (Figs. 5, 6).

7. A communication control method according to claim 6 further comprising the step of setting said limiting information together with passwords, wherein said setting/changing step causes said computer unit to execute said program so as to permit setting/change of said limiting information when a password recorded on said recording medium coincides with a password set together with said limiting information (ST33).

8. A communication control terminal unit (12) interposed between a computer unit (10) and a public communication line (20) to communicate with a connection destination to which dial up-connection is requested by said computer unit, comprising:
a limiting information hold means (133) for changeably holding limiting information for limiting a connection destination to which dial up-connection is made;
a connection determining means (127, ST62, ST65) which, when a request for dial up-connection is made from said computer unit, determines on a basis of a telephone number of a requested connection destination and said limiting information of said limiting information hold means whether connection to said requested connection destination is permitted; and
a communication means (123) for performing communication by transmitting the telephone number of said connection destination to said public communication line side when permission to connect is settled by said connection determining means.

9. A communication control terminal unit according to claim 8, wherein said limiting information hold means holds, as said limiting information, telephone number information of connection destinations for which connection is permitted.

10. A communication control terminal unit according to claim 8, wherein said limiting information hold means holds, as said limiting information, telephone number information of connection destinations for which connection is not permitted.

11. A communication control terminal unit according to claim 8, wherein
said limiting information hold means holds said limiting information together with passwords; and
said communication control terminal unit further comprises a means (127, ST33) which, when a request for setting/changing the limiting information is made from said computer unit, collates a held password with a password from said computer unit and acknowledges said request for setting/change when said passwords coincide with each other.

12. A communication terminal unit according to claim 8 further comprising a communicator means (135) which, when permission to connect is not settled by said connection determining means, responds to the determination result from said connection determining means to inform that connection to said requested connection destination is limited.

13. A communication terminal unit according to claim 8 further comprising a connection limiting signal output means (ST65) which, when permission to connect is not settled by said connection determining means, responds to the determination result from said connection determining means to deliver to said computer unit a signal indicating that connection to said requested connection destination is limited.
